Europäisches Patentamt

European Patent Office

Office européen des brevets

(11) Publication number : **0 474 493 A1**

# EUROPEAN PATENT APPLICATION

(21) Application number : **91308141.0**

(22) Date of filing : **05.09.91**

(51) Int. Cl.⁵ : **G05B 19/04, F02D 41/26**

(30) Priority : **06.09.90 US 579072**

(43) Date of publication of application :
**11.03.92 Bulletin 92/11**

(84) Designated Contracting States :
**DE ES FR GB IT SE**

(71) Applicant : **Adrain, John B**
**723 Ocean View Drive**
**Port Huemene, California 93041 (US)**

(72) Inventor : **Adrain , John B**
**723 Ocean View Drive**
**Port Huemene, CA 93041 (US)**
Inventor : **Colln, John van**
**673 Ocean View Drive**
**Port Huemene, CA 93041 (US)**

(74) Representative : **Gura, Henry Alan et al**
**MEWBURN ELLIS 2 Cursitor Street**
**London EC4A 1BQ (GB)**

(54) **Automotive multiple memory selector apparatus with human interactive control.**

(57) The ability of an automotive computer for controlling an engine is enhanced by allowing the automotive computer (10) to be controlled by an arbitrarily selected one of a plurality of engine control programs (12(1)-12(a)) according to arbitrary driver discretion. The bus (18) connecting the computer and memory of a conventional automotive computer is connected to a computer controlled operator interactive control module (16) and an expanded memory (12(1)-12(a)). The operator interactive control module allows a human operator to select one of a plurality of memories (12(1)-12(a)) for coupling to the automotive computer to control engine performance. User on-site customization of the engine control program is permitted by allowing direct downloading of an engine control program into the automotive computer through the operator interactive control.

EP 0 474 493 A1

FIG-1

AUTOMOTIVE
COMPUTER

10

18

DATA / CONTROL / ADDRESS

MEMORY SELECTOR
DEVICE

7

ADDRESS / CONTROL / POWER

14

12(1)

ROM 1

12(2)

ROM 2

12(n)

ROMn

ENABLE 1

ENABLE 2

ENABLEn

18

16

HUMAN
INTERACTIVE
CONTROL
MODULE

ENABLE 1

ENABLE 2

20(1) - 20(n)

ENABLEn

*1. Field of the Invention*

The invention relates to the field of automotive controls and more generally to controls of apparatus of any type which is operated by or must be responsive to human interactive control.

*2. Description of the Prior Art*

Most automobiles have the engine functions controlled by onboard computer chips. Fuel injection, timing, temperature and RPM are input into an onboard computer which then calculates the desired engine timing according to a prestored fixed program.

Advances in the prior art have been directed to increasing levels of sophistication or intelligence typically manifested by more varied types of engine or vehicle data inputs and use of increasingly sophisticated engine control output programs. For example, **Stevenson et al.**, *"Engine Control System"* ; U.S. Patent 4,368,705 (1983), describes an engine control system utilizing a digital microprocessor for controlling the timing mechanism and fuel pump rack limit to set engine timing of and maximum allowable rate of fuel delivery to the engine for maximum engine performance within smoke and emissions as set by EPA levels. **Holmes**, *"Adaptive Control for an Internal Combustion Engine"*, U.S. Patent 4,893,600 (1990), is directed generally to a digital computer system for establishing values for control parameters which will be continuously varied in accordance with one or more operating input parameters on the engine. **Quigley et al.**, *"Engine Control System with Adaptive Air Charge Control"*; U.S. Patent 4,879,656 (1989), describes another onboard computer system in which the fuel charge and ignition spark timing of the operating engine is controlled as a function of stored tables based on engine speed and air charge. **McHale et al.,** *"Adaptive Control System for an Internal Combustion Engine"*,U.S. Patent 4,841,933 (1989), is also directed to a computer control system in which an engine control parameter is continuously monitored and dynamically directed. Control is implemented in different modes depending upon the speed range. **Takasu et al.**, *"Method and Apparatus for Controlling Ignition Timing in a Multicylinder Internal Combustion Engine"*, U.S. Patent 4,453,521 (1984), describes a system in which a plurality of prestored ignition timing combinations are utilized to continuously search and find an optimum ignition timing combination. **Willis et al.**, *"Adaptive Strategy to Control Internal Combustion Engine"*, U.S. Patent 4,438,497 (1984), discloses a method for adaptively controlling engine calibration control values. A driving pattern is perfected based on analysis of recent past driving patterns and engine control values appropriate for the predicted driving pattern and desired emission constraint are then generated. Driving cycles are analyzed to generate a table of engine calibration control values. **Suzuki et al.**, *"Method and Apparatus for Optimum Control for Internal Combustion Engines"*, U.S. Patent 4,403,584 (1983), discloses a computer system for optimum control of an engine in which values of ignition time and an air/fuel ratio of the engine are prestored in the form of maps in accordance with parameters indicative of operating conditions of the engine. **Kamifuji et al.**, *"Engine Control Apparatus and Control Method"*, U.S. Patent 4,547,852 (1985), describes a method of controlling an engine based upon continuous updating of parameters relating to engine temperature as applied to a prestored control program. **Goldenberg et al.**, *"Automotive Regulating Process and Device for Multifuel Internal Combustion Engines"*, U.S. Patent 4,682,293 (1987), describes an automotive computer system for automatically regulating the running condition of an engine fed with different fuels. The regulator monitors the data processing unit delivering signals representative of the amount and type of fuel being contained in the tank before and after a new fuel supply is provided and controlling the engine correspondingly.

What each of the examples of prior art engine control technology illustrates is that control of the engine and response to some change in the operating characteristics is automatically effectuated through a prestored program or at least through a prestored algorithm which continuously generates control numbers used to modify prestored operating programs, maps or tables. In all cases, the human operator of the vehicle cannot actively intervene to alter engine operating protocol other than through the manipulation of normal controls and then only subject to the constraints provided by the onboard computer.

Therefore, what is needed is some means whereby computer operator control of an engine can be made more responsive to the human operator.

In order to change the operating program in a conventional automotive computer system the battery is disconnected from the vehicle while the transrnission is in park, and the engine turned off. The glove compartment is removed to allow access to the automotive computer. The computer module is then dislodged from its mounting and its wiring harness is removed. Typically, a face plate on the computer module must be unscrewed to allow access to an Erasable Programmable Read Only Memory (EPROM) which contains the operating parameters. The EPROM is then removed from the socket and replaced with a new EPROM, there being socket space for only one memory chip. The whole procedure is then reversed to restore the vehicle to an operating condition.

Furthermore, means is required in order to inexpensively and conveniently retrofit prior art computer controlled vehicles to permit greater operator interactive control.

Still further, when retrofitting an automobile with an automotive alarm, it is often necessary to cut or splice into the wiring harness of the automobile in order to disable the automobile upon an alarm condition. Since practical access to the automotive computer is not possible, it cannot be disabled. Therefore, only interruption of the powering harness is available as a means of selective engine disablement.

**Brief Summary of the Invention**

The invention is an improvement in an apparatus operated by a human operator. The apparatus is controlled at least in part by a computer. The control of the apparatus by the computer is implemented by means of a program stored in a memory. The improvement comprises a plurality of memories. Each of the memories stores a program for controlling operation of the apparatus in a distinguishable mode. An operator interactive control is coupled to the plurality of memories for selectively communicating one of the plurality of memories to the computer in response to arbitrary human operator selection input to the interactive control.

As a result, the apparatus is caused to operate in the selected mode according to the arbitrary decision of the operator.

The operator interactive control comprises a circuit for sensing a plurality of operating conditions. The selected mode causes the apparatus to operate in a distinguishable manner consistent with the sensed operating conditions according to the selected mode.

In one embodiment the operator interactive control also comprises a circuit for selectively operating the apparatus through the computer without selection of one,of the plurality of memories.

In another embodiment the operative interactive control comprises a circuit for controlling the apparatus through the computer according to directly entered instructions from the human operator.

The operator interactive control comprises a user computer for generating a plurality of memory enable signals and a manual control switch circuit for allowing manual selection of one of the plurality of memory enable signals. The selected memory enable signal is coupled to the plurality of memories for selecting one of the memories for operation of the apparatus through the computer.

In the illustrated embodiment the apparatus is an engine and the programs stored within the plurality of memories are operating parameters for engine performance. The programs stored within the plurality of memories are operating parameters for engine performance.

The computer for controlling the apparatus comprises a memory and a bus. The bus couples the computer and memory. The plurality of memories and operator interactive control is coupled to the computer through the bus as a retrofitted circuit.

The invention can also be characterized as an improved automotive computer for controlling engine performance comprising a first computer for providing control signals to the engine from a plurality of engine operating parameters. A plurality of memories are coupled to the first computer for providing a plurality of distinguishable programmable modes for operating the engine. An operative interactive control is coupled to the plurality of memories and to the first computer for allowing a human operator to arbitrarily select one of the plurality of memories for coupling to the first computer to control the operation of the engine according to arbitrary human discretion among a plurality of modes corresponding to the plurality of memories. As a result, engine operation is made driver responsive.

The operator interactive control comprises a second computer coupled to the plurality of memories and first computer. The second computer selectively generates a plurality of memory select commands. The operator interactive control further comprises a manual control circuit for allowing the human operator to arbitrarily select one of the memory select commands for coupling to the plurality of memories.

The enhanced automotive computer control system further comprises a plurality of sensors coupled to the second computer for communication to the first computer according to the arbitrarily selected one of the modes corresponding to a selected one of the memories.

One of the sensors is an alarm interface. The alarm interface detects a theft/intrusion attempt. The alarm interface is operatively coupled to the first computer through the second computer without other circuit of connection. The second computer initiates an engine disablement mode upon activation of the alarm interface.

The enhanced automotive computer control system further comprises an input circuit for loading user provided operating parameters into the second computer for communication to the first computer for control of the engine.

The engine is originally provided with the first computer coupled to one of the plurality of memories. The remainder of the plurality of memories and the operative interactive control system are retrofitted by coupling thereto. The remainder of the plurality of memories and the operator interactive control are coupled to the first computer and one of the plurality of memories by a bus. The bus is originally provided with the first computer and one of the plurality of memories. As a result, retrofitting the enhanced automotive computer control system to the originally provided first computer control and the one memory is simplified.

The invention can still further be characterized as an automotive computer control system for an engine to control engine performance. The invention comprises a computer coupled to the engine operative to control the performance of the engine according to an engine control program. A memory is coupled to the computer for storing a plurality of programs. Each of the programs is capable of controlling the operating performance of the engine. An operator interactive control circuit is coupled to the computer and to the memory for allowing selection of one of the programs stored within the memory for control of the engine by the computer. The selection designating the program as the engine control program is determined by arbitrarily exercised discretion of the human operator.

The invention and its various embodiments can better be visualized by now turning to the following drawings wherein like elements are referenced by like numerals.

**Brief Description of the Drawings**

Figure 1 is a diagrammatic block diagram showing the circuit of the invention coupled to an automotive computer.

Figure 2 is a diagrammatic block diagram of the human interactive control module of Figure 1.

Figure 3 is a simplified flow diagram illustrating the operation of the invention.

Figure 4 is a simplified flow diagram illustrating the operation of the security program of the invention.

The invention and its various embodiments can now be understood by turning to the following detailed description.

**Detailed Description of the Preferred Embodiments**

The ability of an automotive computer for controlling an engine is enhanced by allowing the automotive computer to be controlled by an arbitrarily selected one of a plurality of engine control programs according to arbitrary driver discretion. The bus connecting the computer and memory of a conventional automotive computer is connected to a computer controlled operator interactive control module and an expanded memory. The operator interactive control module allows a human operator to select one of a plurality of memories for coupling to the automotive computer to control engine performance. User on-site customization of the engine control program is permitted by allowing direct downloading of an engine control program into the automotive computer through the operator interactive control.

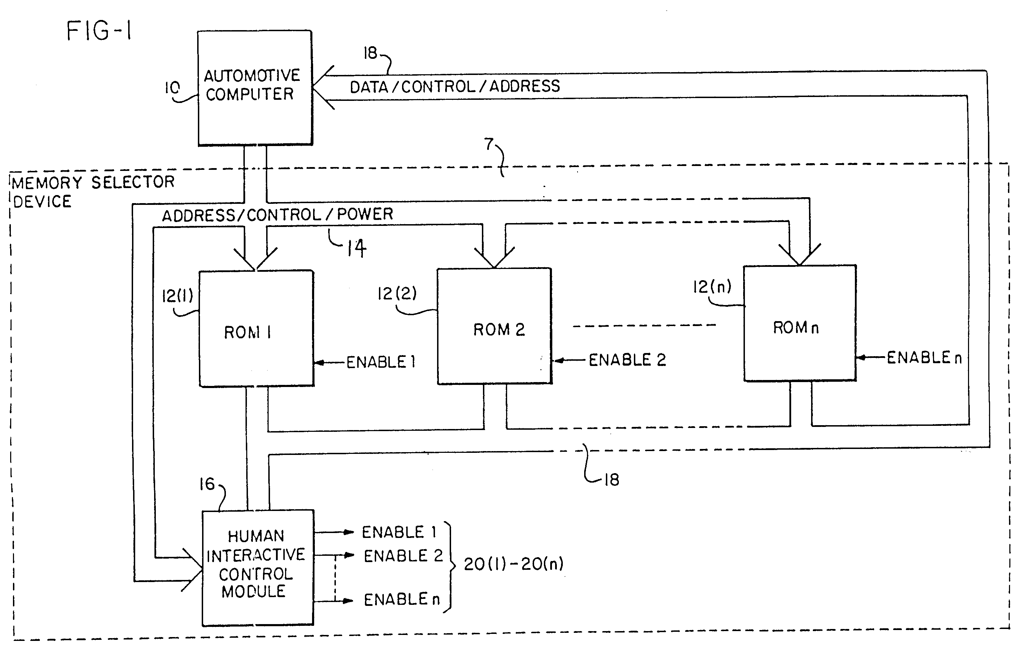

Figure 1 is a block diagram of the invention used in combination with a conventional automotive computer 10. Automotive computer 10 is coupled with a plurality of READ ONLY MEMORIES (ROM) 12(1), 12(2)... 12(n) by means of an address and control bus 14. The prestored program to which automotive computer 10 would normally have access would typically be stored within only one ROM 12(1)-12(n). However, according to the teachings of the invention a larger plurality of ROMs 12(1)-12(n) is provided and these are selectively coupled to automotive computer 10 subject to the control of a human interactive control module 16.

Control module 16 is coupled to ROMs 12(1)-12(n) and to automotive computer 10 by a data/control and address bus 18 and is also coupled to address and control bus 14. As will be described below, control module 16 generates a plurality of enable signals 20(1)-20(n) which are distributed to ROMs 12(1)-12(n) and selectively enable one of the ROMs as determined by the human operator.

ROMs 12(1)-12(n) may store a corresponding plurality of sets of operating parameters for automotive computer 10. These operating parameters may include, but are not limited to: a stock configuration which would normally be supplied with the vehicle at the factory; a specially programmed higher economy and lower performance set of operating parameters; a higher performance and lower economy set of operating parameters; a low emissions or prespecified EPA set of operating parameters; a valet parking configuration in which the performance of the vehicle is substantially limited; and a security setting which disables the function of the engine, or even custom operating parameters input by the human operator.

Control module 16 thus allows the human operator to select any one of the sets of operating parameters in ROMs 12(1)-12(n) to be supplied to automotive computer 10 or alternatively to disconnect all of the ROMs and to provide operating parameters directly to automotive computer 10 from control module 16.

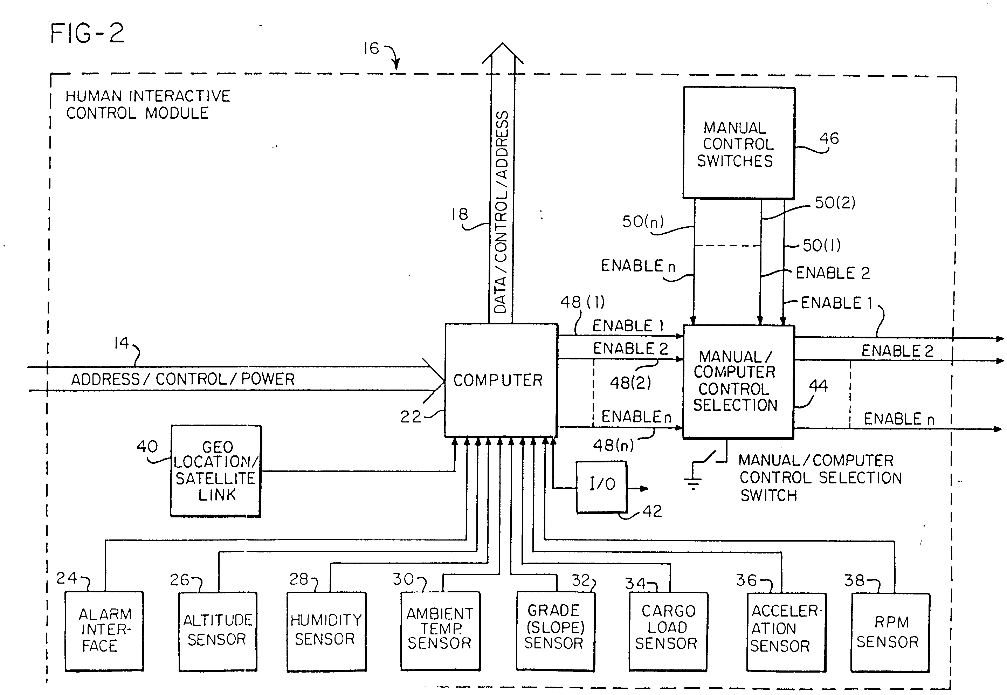

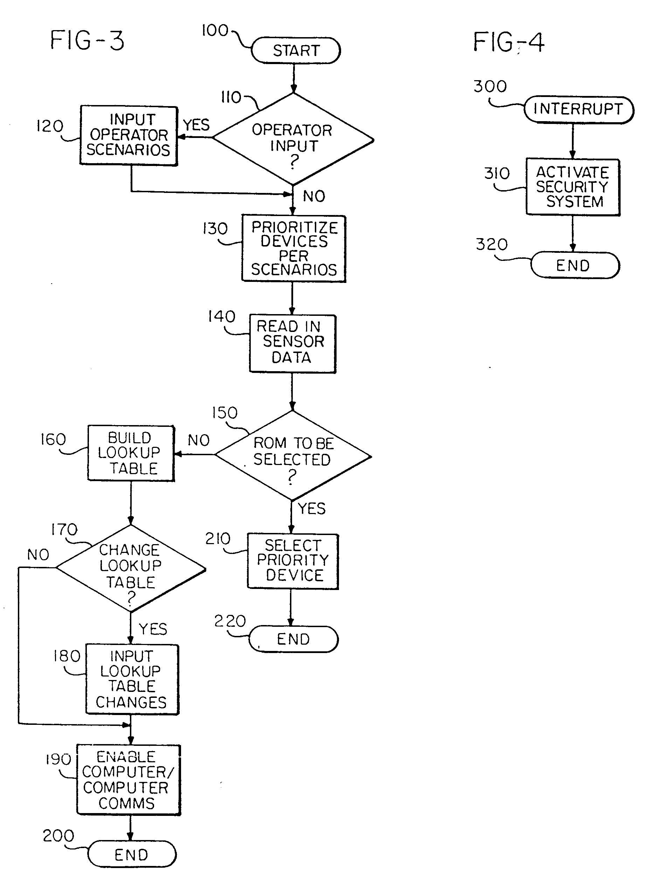

Turn now to the block diagram of Figure 2 which illustrates one embodiment of the human interactive control module 16 in greater detail. Module 16 includes a computer subsystem 22 coupled to address and control bus 14 and data and control bus 18. Computer subsystem includes a central processing unit and memory. Computer subsystem 22 implements the program described below in connection with Figures 3 and 4. Inputs are provided to computer subsystem 22 from a plurality of sensors 24-40. In the illustrated embodiment an alarm interface 24 is provided when intrusion or attempted entry into the vehicle is sensed. In addition to the activation of audio alarm, this causes computer subsystem 22 to send commands to automotive computer 10 to disable all engine functions so that the engine will not run even when hot-wired. This disablement may be permanent until reset by an appropriately entered secret code such as might be input through a keypad or a thumbwheel switch forming part of an input/output device 42.

Another input to computer subsystem 22 includes an altitude sensor 26 for providing information which will adjust timing and fuel mixtures according to octane and oxygen percentages depending upon measured barometric pressures.

Humidity sensor 28 provides computer subsystem 22 with a reading of the local moisture content in air for appropriate adjustment of the ignition timing. Ambient temperature sensor 30 similarly provides the ambient temperature for timing adjustment. Slope sensor 32 provides information to computer subsystem 22 to allow adjustments to be made to engine timing depending upon whether the grade is an up-grade or down-grade and depending upon its degree. Cargo load sensor 34 senses the degree of depression in the suspension system depending upon the load of the vehicle in order to make appropriate operational adjustments. Acceleration sensor 36 measures the actual acceleration to which the automobile is subjected, which acceleration sensing allows for drag, prevailing wind conditions, road friction and other variables which cause actual acceleration to vary from expected acceleration from the engine output. RPM sensor 38 provides the RPM of the engine. A geolocation satellite link 40 through an antenna and navigational system included within link 40 provides locational information to the operator or which can be used in combination with alarm information to provide locational data to a remote theft reporting center to allow tracking of the vehicle in the case that the vehicle is towed or carted while an intrusion alarm has been activated.

Computer subsystem 22 generates a plurality of commands, ENABLE(1)-ENABLE(n) 48(1)-48(n) which are provided to a buffer circuit 44. Buffer circuit 44 is also provided with a plurality of user selected corresponding commands, ENABLE(1)-ENABLE(n) 50(1)-50(n), provided by manual control switches 46. Manual control switches 46 may be thumbwheel switches, a keypad, or a rotary key lock switch which allows the human operator to select from the sets of operating conditions stored in ROMs 12(1)-12(n) by manually positioning switch 46 according to the operator's own wishes and discretion. According to the manual position of switch 46, a control signal 50(1)-50(n) is provided to buffer 44. Another set of control signals 48(1)48(n) is generated by computer subsystem 22 and provided to buffer 44. The selected control signal 20(1)-20(n) coupled through buffer 44 to ROMs 12(1)-12(n) is chosen from the two sets of control signals 48(1)-48(n) and 50(1)-50(n) by a manual/computer control selection switch 52.

Therefore, the operational condition of the vehicle may be arbitrarily changed according to the operator's discretion and even whim. If the operator is on an uncrowded open highway, he may wish to change the operating conditions of the engine to one which provides optimum fuel economy at constant high speed. If traffic conditions on the same highway are more crowded, the operator may wish to switch on occasion to a mode which provides enhanced power at the cost of fuel efficiency in order, for example, to pass a train of slow moving vehicles. There is nothing in the normal road conditions or operating conditions which can be sensed to automatically switch engine performance according to these types of conditions. These and many other types of conditions are in fact sensed only by the intelligence of the human driver, which is often the most sophisticated intelligence on-board in regard to certain types and levels of decisions relating to engine performance. Only signals such as acceleration, deceleration, cruising, etc. are road or driving conditions which can be used in an automatic or computer controlled mode of operation.

Therefore, what control module 16 allows is human interaction with the operating condition of the engine according to the decision or even the whim of the driver so that the driver's performance, safety and psychological needs as perceived by the driver himself can be filled.

The input/output unit 42 may also include cartridge or digital disk input so that the driver may provide digital input to computer subsystem 22 to provide a custom modification of any one of the sets of operating parameters within ROMs 12(1)- 12(n), or to provide a totally new custom set based upon his of analysis of engine operating conditions. Such input devices may include, for example, 3 1/2" floppy disks, which are uploaded from the driver's home personal computer using other sofware relating to engine analysis.

The operation of the circuitry of Figures 1 and 2 is described in greater detail in connection with the flow diagrams of Figures 3 and 4. In Figure 3 the methodology begins with step 100 and step 110 wherein operator input is requested. The operator may input various scenarios at step 120 either by positioning manual control switches 46 or by providing an input through input/ouput module 42. In either case, the operation continues with step 130 wherein various portions of the circuitry of Figures 1 and 2 are prioritized or initialized, such as registers and scratch memories, according to the selected scenario. Any one or more of sensors 24-40 are then read and formatted at step 140. At step 150 the decision is made whether or not the operating conditions will be selected from one of the ROMs 12(1)-12(n) or whether the operating parameters will be provided on bus 18 to automative computer 10 directly from computer subsystem 22. If a ROM 12(1)-12(n) is to be selected, then the appropriate ROM 12(1)-12(n) is selected at step 210 according to the scenario previously identified by the driver. The methodology is then completed at step 220.

However, if operating conditions are to be provided to computer 10 directly from computer subsystem 22 a lookup table similar to that contained within one of the ROMs is created at step 160 within memory included within computer 22. If the operator wishes to change or customize the data contained within the lookup table, modification of the lookup table is implemented at step 180, otherwise the process continues with step 190. Computer 22 of module 16 then communicates the result of the modified or unmodified table to automotive computer 10 at step 190 and the process terminates with step 200.

If at any time activation of the alarm interface 24 occurs, an interrupt is generated as shown in Figure 4 to cause a security response to be taken at step 310. This security response could include disabling the engine and/or transmitting data from satellite link 40 to a remote police or security tracking station. Execution of a security interrupt subprogram ends at step 320 with return to normal processing.

Many alterations and modifications may be made by those having ordinary skill in the art without departing from the spirit and scope of the invention. Therefore, it must be understood that the illustrated embodiment has been set forth only for the purposes of example and should not be taken as limiting the invention as defined in the following claims. The claims are to be construed not only to include equivalent means for performing substantially the same function in substantially the same way to obtain substantially the same result, but to include all means for obtaining the same result even by different functions or ways. For example, it is expressly within the scope of the invention that instead of a plurality of ROMs 12(1)-12(n), what will be provided or selected by the driver will be an address location in a single larger ROM in which a plurality of sets of operating parameters have been stored. Therefore, instead of a buffer 44 providing an ENABLE control signal 20(1)-20(n) computer 22 will provide a starting address as determined by manual control switches 46 to read a program stored in a single memory.

## Claims

1. An improvement in an apparatus operated by a human operator, said apparatus being controlled at least in part by a computer, said control of said apparatus through said computer being implemented by means of a program stored in a memory, said improvement comprising:
a plurality of memories, each of said memories for storing a program for controlling operation of said apparatus in a distinguishable mode; and
an operator interactive control coupled to said plurality of memories for selectively communicating one of said plurality of memories to said computer in response to arbitrary human operator selection input to said interactive control,
whereby said apparatus is caused to operate in said selected mode according to the arbitrary decision of said operator.

2. The improvement of Claim 1 wherein said operator interactive control comprises means for sensing a plurality of operating conditions, said selected mode causing said apparatus to operate in a distinguishable manner consistent with said sensed operating conditions according to said selected mode.

3. The improvement of Claim 1 wherein said operator interactive control comprises means for selectively operating said apparatus through said computer without selection of one of said plurality of memories.

4. The improvement of Claim 1 wherein said operative interactive control comprises means for controlling said apparatus through said computer according to directly entered instructions from said human operator.

5. The improvement of Claim 1 wherein said operator interactive control comprises a user computer for generating a plurality of memory enable signals and a manual control switch means for allowing manual selection of one of said plurality of memory enable signals, said selected memory enable signal being coupled to said plurality of memories for selecting one of said memories for operation of said apparatus through said computer.

6. The improvement of Claim 1 wherein said apparatus is an engine and wherein said programs stored within said plurality of memories are operating parameters for engine performance.

7. The improvement of Claim 4 wherein said apparatus is an engine and wherein said programs stored within said plurality of memories are operating parameters for engine performance.

8. The improvement of Claim 1 wherein said computer for controlling said apparatus comprises a memory and a bus, said bus coupling said computer and memory and wherein said plurality of memories and operator interactive control are coupled to said computer through said bus as a retrofitted circuit.

9. The improvement of Claim 7 wherein said computer for controlling said apparatus comprises a memory and a bus, said bus coupling said computer and memory and wherein said plurality of memories and operator interactive control are coupled to said computer through said bus as a retrofitted circuit.

10. The improvement of Claim 9 wherein said operator interactive control comprises a user computer for generating a plurality of memory enable signals and a manual control switch means for allowing manual selection of one of said plurality of memory enable signals, said selected memory enable signal being coupled to said plurality of memories for selecting one of said memories for operation of said apparatus through said computer.

11. An improved automotive computer for controlling engine performanee comprising:
a first computer for providing control signals to said engine from a plurality of engine operating parameters;
a plurality of memories coupled to said first computer for providing a plurality of distinguishable programmable modes for operating said engine;
operative interactive control coupled to said plurality of memories and to said first computer for allowing a human operator to arbitrarily select one of said plurality of memories for coupling to said first computer to control the operation of said engine according to arbitrary human discretion among a plurality of modes corresponding to said plurality of memories,
whereby engine operation is made driver responsive.

12. The enhanced automotive computer control system of Claim 11 wherein said operator interactive control comprises a second computer coupled to said plurality of memories and first computer, said second computer for selectively generating a plurality of memory select commands, said operator interactive control further comprising a manual control means for allowing said human operator to arbitrarily select one of said memory select commands for coupling to said plurality of memories.

13. The enhanced automotive computer control system of Claim 12 further comprising a plurality of sensors coupled to said second computer for communication to said first computer according to said arbitrarily selected one of said modes corresponding to a selected one of said memories.

14. The enhanced automotive computer control system of Claim 13 wherein one of said sensors is an alarm interface, said alarm interface for detecting a theft/intrusion attempt, said alarm interface being operatively coupled to said first computer through said second computer without other means of connection.

15. The enhanced automotive computer control of Claim 14 wherein said second computer initiates an engine disablement mode upon activation of said alarm interface.

16. The enhanced automotive computer control system of Claim 11 further comprising input means for loading user provided operating parameters into said second computer for communication to said first computer for control of said engine.

17. The enhanced automotive computer control system of Claim 11 wherein said engine is originally provided with said first computer coupled to one of said plurality of memories and wherein said remainder of said plurality of memories and said operative interactive control system are retrofitted by coupling thereto, said remainder of said plurality of memories and said operator interactive control being coupled to said first computer and said one of said plurality of memories by a bus, said bus being originally provided with said first computer and said one of said plurality of memories, whereby retrofitting said enhanced automotive computer control system to said originally provided first computer control and said one memory is simplified.

18. An automotive computer control system for an engine to control engine performance comprising:
a computer coupled to said engine operative to control the performance of said engine according to an engine control program;
a memory coupled to said computer for storing a plurality of programs, each of said programs capable of controlling said operating performance of said engine; and
operator interactive control means coupled to said computer and to said memory for allowing selection of one of said programs stored within said memory for control of said engine by said computer, said selection designating said program as said engine control program as determined by arbitrarily exercised discretion of said human operator.

19. The automotive computer control system of Claim 18 wherein said computer and memory are coupled by a bus originally supplied with said engine, said operator interactive control means being retrofitted and coupled to said bus to provide expanded memory and master control over said computer and memory.

20. The automotive computer control system of Claim 18 further comprising means for controlling said computer according to a user provided program for said engine control program.

FIG-I

AUTOMOTIVE COMPUTER

10

18

DATA/CONTROL/ADDRESS

7

MEMORY SELECTOR DEVICE

ADDRESS/CONTROL/POWER

14

12(1)

ROM I

12(2)

ROM 2

12(n)

ROM n

ENABLE I

ENABLE 2

ENABLE n

18

16

HUMAN INTERACTIVE CONTROL MODULE

ENABLE 1

ENABLE 2

ENABLE n

20(1)-20(n)

EP 0 474 493 A1

FIG-2

HUMAN INTERACTIVE CONTROL MODULE

16

DATA / CONTROL / ADDRESS  18

MANUAL CONTROL SWITCHES  46

50(n)  50(2)  50(1)

ENABLE n  ENABLE 2  ENABLE 1

14  ADDRESS / CONTROL / POWER

COMPUTER  22

48(1) ENABLE 1
ENABLE 2
48(2)
ENABLE n
48(n)

MANUAL / COMPUTER CONTROL SELECTION  44

ENABLE 1
ENABLE 2
ENABLE n

MANUAL / COMPUTER CONTROL SELECTION SWITCH

40  GEO LOCATION / SATELLITE LINK

I/O  42

24 ALARM INTER-FACE

26 ALTITUDE SENSOR

28 HUMIDITY SENSOR

30 AMBIENT TEMP. SENSOR

32 GRADE (SLOPE) SENSOR

34 CARGO LOAD SENSOR

36 ACCELER-ATION SENSOR

38 RPM SENSOR

EP 0 474 493 A1

FIG-3

FIG-4

100 START

110 OPERATOR INPUT ?

120 INPUT OPERATOR SCENARIOS — YES

NO

130 PRIORITIZE DEVICES PER SCENARIOS

140 READ IN SENSOR DATA

150 ROM TO BE SELECTED ?

160 BUILD LOOKUP TABLE — NO

YES

210 SELECT PRIORITY DEVICE

220 END

170 CHANGE LOOKUP TABLE ?

NO

180 INPUT LOOKUP TABLE CHANGES — YES

190 ENABLE COMPUTER/ COMPUTER COMMS

200 END

300 INTERRUPT

310 ACTIVATE SECURITY SYSTEM

320 END

**European Patent Office**

## EUROPEAN SEARCH REPORT

Application Number

| DOCUMENTS CONSIDERED TO BE RELEVANT | | EP 91308141.0 |

| Category | Citation of document with indication, where appropriate, of relevant passages | Relevant to claim | CLASSIFICATION OF THE APPLICATION (Int. Cl.5) |
|---|---|---|---|
| X | DE - A1 - 3 018 275 (BOSCH) * Totality; especially fig. 1,2 * | 1,3,4, 6,7, 11,18 | G 05 B 19/04 F 02 D 41/26 |
| Y | | 2 | |
| A | | 5,12 | |
| Y | US - A - 4 277 829 (TOKUDA et al.) * Fig. 3,7,8; abstract * | 2 | |
| A | | 13 | |
| A | DE - A1 - 3 515 040 (KLÖCKNER) * Totality * | 8,9,12 | |
| A | WO - A1 - 89/04 917 (BOSCH) * Fig. 1,2 * | 1,11, 18 | |
| A | DE - A1 - 3 407 920 (BOSCH) * Totality * | 1,11, 18 | TECHNICAL FIELDS SEARCHED (Int. Cl.5) |
| D,A | US - A - 4 893 600 (HOLMES) * Totality * ---- | 1,11, 18 | G 05 B 15/00 G 05 B 19/00 G 05 B 23/00 G 05 B 24/00 F 02 D 41/00 |

The present search report has been drawn up for all claims

| Place of search | Date of completion of the search | Examiner |
|---|---|---|
| VIENNA | 22-10-1991 | FIETZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)